# EUROPÄISCHE PATENTSCHRIFT

(11) **EP 2 067 250 B1**
(45) Veröffentlichungstag und Bekanntmachung des Hinweises auf die Patenterteilung: **30.12.2009**
(21) Anmeldenummer: 07802847.9
(22) Anmeldetag: 24.08.2007
(51) Int. Cl.: H02P 21/14

(54) **FEHLERERKENNUNG DURCH AUSWERTUNG VON GRÖSSEN DER FELDORIENTIERTEN REGELUNG**
ERROR RECOGNITION BY EVALUATION OF PARAMETERS OF THE FIELD ORIENTED REGULATION
DÉTECTION DE DÉFAILLANCES PAR ÉVALUATION DE GRANDEURS DE RÉGLAGE ORIENTÉ VERS LE CHAMP

(30) Priorität: 26.09.2006 DE 102006045397
(43) Veröffentlichungstag der Anmeldung: 10.06.2009
(73) Patentinhaber: SIEMENS AKTIENGESELLSCHAFT, 80333 München (DE)
(72) Erfinder: OLOMSKI, Jürgen, 91074 Herzogenaurach (DE)
(86) Internationale Anmeldenummer: PCT/EP2007/058795
(87) Internationale Veröffentlichungsnummer: WO 2008/037551

(56) Entgegenhaltungen:
- EP-A- 1 311 047
- US-A1- 2004 257 027
- US-A1- 2005 140 324
- US-B1- 6 822 416

## Beschreibung

Die Erfindung betrifft eine Antriebsvorrichtung bzw. ein Verfahren zum Betrieb einer Antriebsvorrichtung. Bei einer derartigen Antriebsvorrichtung bzw. bei einem derartigen Verfahren sollen Fehler erkannt werden, welche beispielsweise auf einen Kupplungsbruch oder einen Geberfehler zurückzuführen sind.

Zur Regelung elektrischer Maschinen werden Geber eingesetzt, welche beispielsweise einen Drehzahl-Istwert, einen Beschleunigungsliste oder auch einen Lage-Istwert für eine Steuerung bzw. Regelung der elektrischen Maschine liefern. Derartige Signale bezüglich Lage, Drehzahl oder Beschleunigung können fehlerhaft sein, so dass ein Geberfehler vorliegt. Geberfehler können beispielsweise begründet sein durch einen Kupplungsbruch, also einen Fehler, welchen die Anbringung des Gebers an eine Achse der elektrischen Maschine betrifft, oder durch einen Fehler des Gebers selbst. Beim Geber können beispielsweise die Geberelektronik oder auch eine Geberscheibe fehlerhaft sein.

Die Antriebsvorrichtung betrifft insbesondere eine Antriebsvorrichtung einer Werkzeugmaschine bzw. einer Produktionsmaschine. Bei sicherheitsüberwachten Werkzeugmaschinen bzw. Produktionsmaschinen werden im Allgemeinen u.U. vorhandene Geberkupplungen und Gebermechaniken nicht redundant überwacht, da diese Einrichtungen eine hohe Ausfallsicherheit aufweisen. Die Gebermechanik betrifft dabei insbesondere eine Geberscheibe. Bei Werkzeugmaschinen und Produktionsmaschinen erlangt die Sicherheitstechnik allerdings eine immer größere Bedeutung. Dies kommt auch darin zum Ausdruck, dass das Schlagwort "safety integrated" für Anwender von Werkzeug- bzw. Produktionsmaschinen eine immer größere Bedeutung erlangt. Im Zuge oftmals aufwändiger Zertifizierungsnachweise wird insbesondere die Überwachung der Gebermechanik bzw. Geberkupplung zunehmend gefordert.

Da die Antriebsvorrichtung vorteilhaft möglichst einfach und kostengünstig zu realisieren ist, ergibt sich hieraus, dass auch eine Überwachung bezüglich eines Fehlers des Gebers bzw. einer Kupplung in einfacher und kostengünstiger Weise realisierbar sein soll. Darüber hinaus sollte die Fehlerüberwachung auch möglichst genau und schnell sein.

Diese Aufgabe wird erfindungsgemäß gelöst bei einer Antriebsvorrichtung mit den Merkmalen nach Anspruch 1 bzw. bei einem Verfahren mit den Merkmalen gemäß Anspruch 5. Die abhängigen Patentansprüche 2 bis 4 und 6 bis 9 stellen erfindungsgemäße Weiterbildungen der Vorrichtung bzw. des Verfahrens dar.

Eine Antriebsvorrichtung einer elektrischen Maschine weist eine Vorrichtung zur feldorientierten Regelung der elektrischen Maschine auf. Die Antriebseinrichtung kann ferner ein Stromrichter und ein Geber für die elektrische Maschine zugeordnet sein. Die elektrische Maschine ist mittels eines an diese angeschlossenen Stromrichter betreibbar. Mittels der feldorientierten Regelung ist die elektrische Maschine über den Stromrichter steuerbar bzw. regelbar. Der Stromrichter ist als Stromrichtergerät ausbildbar, wobei in diesem Gerät eine Steuerungs- und/oder Regelungsvorrichtung integriert ist, mittels derer die feldorientierte Regelung ausführbar ist. Der Geber der Antriebsvorrichtung ist beispielsweise direkt mit einer Welle der elektrischen Maschine gekoppelt bzw. mittels einer Kupplung. Die Ankopplung des Gebers erfolgt nach dem Stand der Technik an einer Geberwelle der elektrischen Maschine, wobei sich diese auf einer Bedienseite der elektrischen Maschine befindet. Der Aufbau und die Struktur der feldorientierten Regelung sind beispielsweise aus der EP 0469177 B1 bekannt. Diese Regelung ist eine vektorielle Regelung und weist einen Frequenzkanal, einen Amplitudenkanal und einen Istwertrechner auf. Der Frequenzkanal ist eingangs- und ausgangsseitig jeweils mit einem Schalter und versehen. Der Istwertrechner berechnet aus den Istwerten Motor-Strom i_{R,S,T} und Motorspannung U_{R,S,T} die feldorientierten Stromkomponenten i_{µ} und i_{w} und einen Drehzahl-Istwert nᵢₛₜ. Der Stromvektor i_{w} wird zusammen mit dem ermittelten Drehzahl-Istwert nᵢₛₜ dem Frequenzkanal zugeführt. Am Ausgang des Frequenzkanals steht ein Frequenz-Stellwert f_{St} und am Ausgang des Amplitudenkanals steht ein Amplituden-Stellwert u_{St} an. Diese Stellgrößen u_{St} und f_{St} werden einem Steuersatz zugeführt, der daraus Ansteuerimpulse für den Stromrichter erzeugt.

Die erfindungsgemäße Antriebsvorrichtung ist derart ausgestaltet, dass diese eine Vergleichseinrichtung zum Vergleich eines Gebersignals des Gebers mit einer Größe aus der feldorientierten Regelung aufweist. Das vom Geber generierte Gebersignal betrifft beispielsweise die Drehzahl, die Lage oder die Beschleunigung der Welle der elektrischen Maschine. Die Größe aus der feldorientierten Regelung betrifft demzufolge ein entsprechendes Äquivalent zum Gebersignal. Ein derartiges Äquivalent ist beispielsweise die Drehzahl, die Frequenz oder auch die Beschleunigung der Welle der elektrischen Maschine. Aus Größen der feldorientierten Regelung ist darüber hinaus auch ein Lagewert herleitbar. Bei der Verwendung einer Größe aus der feldorientierten Regelung ist stets zu berücksichtigen, dass eventuell eine Umrechnung zwischen elektrischen und mechanischen Größen erfolgen muss. Diese Umrechnung ist insbesondere vom verwendeten Typ der elektrischen Maschine abhängig. Dabei spielt insbesondere die vorhandene Polpaarzahl einer Ständerwicklung bzw. eines Läufers.eine Rolle. Ferner ist zu berücksichtigen, ob es sich bei der elektrischen Maschine um eine Synchronmaschine bzw. Asynchronmaschine handelt. Abhängig davon gibt es Unterschiede bei der feldorientierten Regelung.

Beispiele für eine feldorientierte Regelung bei Asynchronmaschinen sind beispielsweise aus den Patentanmeldungen EP 0 633 653 A1 und EP 0 690 556 A1 bekannt. Auch bei Synchronmaschinen findet die feldorientierte Regelung Anwendung, siehe hierzu beispielsweise die amerikanische Patentschrift US 6,822,416. Im Konferenzbericht "Position-sensorless control of direct permanent magnet synchronous motors for railway traction" (Proceedings PESC 04 Conference, Aachen, Juni 2004) sind weitere Blockdiagramme zur feldorientierten Regelung dargestellt.

Feldorientierte Regelungen von elektrischen Maschinen sind beispielsweise derart ausgestaltbar, dass diese als eine vektorielle Regelung realilsiert sind, wobei diese einen Frequenzkanal, einen Amplitudenkanal und einen Istwertrechner aufweisen. Der Istwertrechner berechnet aus den Istwerten Motorstrom i_{R,S,T} und Motorspannung U_{R,S,T} die feldorientierten Stromkomponenten i_{µ} und i_{w} und einen Drehzahlistwert nᵢₛₜ. Der Stromvektor i_{w} wird zusammen mit dem ermittelten/errechneten Drehzahl-Istwert nᵢₛₜ dem Frequenzkanal zugeführt. Am Ausgang des Frequenzkanals steht ein Frequenz-Stellwert f_{St} und am Ausgang des Amplitudenkanals steht ein Amplituden-Stellwert u_{St} an. Diese Stellgrößen u_{St} und f_{St} werden einem Steuersatz zugeführt, der daraus Ansteuerimpulse für einen Wechselrichter erzeugt.

Die erfindungsgemäße Vergleichseinrichtung ist vorteilhaft zur Erkennung eines Geberfehlers und/oder eines Kupplungsfehlers vorgesehen. Der Fehler wird durch den Vergleich des von einem Geber der elektrischen Maschine erfassten Geberistwertes mit einem aus der feldorientierten Regelung errechneten Geberistwertes ermittelt. Dies geschieht beispielsweise dadurch, dass aus den Werten ein Differenzwert gebildet wird, welcher mit einem Schwellwert verglichen wird. Bei Überschreitung eines festgelegten Schwellwertes wird ein Fehler erkannt. Der errechnete Geberistwert ist dabei folglich z.B. ein errechneter Drehzahlistwert, oder auch ein errechneter Lageistwert.

Es gibt die verschiedensten Beispiele für feldorientierte Regelungen. So kann z.B. ein Mittel zum Erfassen der Blindleistung und Wirkleistung einer elektrischen Maschine (Drehfeldmaschine) vorgesehen sein, wobei aus der prinzipiellen Beziehung ε̂ = arctan (P_{B}/P_{w}) mit P_{B} - Blindleistung und P_{w} - Wirkleistung der vorliegende Ständerstromwinkel in einem Rechenwerk derart bestimmt wird, daß ein der Differenz zwischen dem Soll-Ständerstromwinkel und dem aus der obigen Beziehung bestimmten Ständerstromwinkel entsprechendes Signal einem Feldwinkelregler zugeleitet wird. Dessen Ausgangssignal gibt additiv mit einem dem Schlupf der Drehfeldmaschine entsprechenden Signal eine Sollfrequenz für den weiteren Wandler vor, wobei das Ausgangssignal des Feldwinkelreglers als eine der Ist-Drehzahl der Drehfeldmaschine entsprechende Größe für die Drehzahlregelung dient. Diese Größe ist entsprechend der vorliegenden Erfindung eine aus der feldorientierten Regelung errechnete Größe, welche mit einer von einem Geber erzeugten Größe verglichen werden kann.

Bei der feldorientierten Regelung für Asynchronmaschinen ist die Ist-Frequenz der Maschine und die Ist-Drehzahl der Maschine durch einen Proportionalitätsfaktor miteinander verbunden. Dadurch ist es möglich, das Ausgangssignal des Feldwinkelreglers einem Umsetzer zuzuleiten, an dessen Ausgang dann die Istdrehzahl vorliegt, die einem Drehzahlregler zuleitbar ist. Ein errechneter Drehzahlwert lässt sich also durch die feldorientierte Regelung sowohl bei Asynchronmaschinen wie auch bei Synchronmaschinen gewinnen.

Die erfindungsgemäße Vergleichseinrichtung lässt sich vorteilhaft in einer Einrichtung - auch als Vorrichtung bezeichnet - zur Steuerung und/oder Regelung der elektrischen Maschine integrieren. Diese Einrichtung ist vorteilhaft zur Durchführung der feldorientierten Regelung vorgesehen. All dies lässt sich also folglich in einen Stromrichter integrieren.

Zur Überwachung von Fehlern, wie einem Kupplungsfehler oder einem mechanischen Geberfehler, welche beispielsweise aufgrund eines Schlupfes der Geberscheibe hervorgerufen werden, kann eine Schlepp-Abstandsüberprüfung durchgeführt. Bei der Schlepp-Abstandsüberprüfung wird eine mathematischtheoretische Sollposition aus dem Lageregler mit einer tatsächlichen Ist-Position, welche auf einen Geber-Istwert ermittelbar ist, verglichen. Überschreitet die Differenz beider Werte einen bestimmten Grenzwert, so wird eine Fehlermeldung (Schleppfehler) generiert. Aufgrund der Verwendung des Lagereglers ergeben sich jedoch Ungenauigkeiten und Zeitverzögerungen beim Erkennen eines Geberfehlers. Gemäß der Erfindung kann auf die Verwendung eines Wertes aus der Lageregelung oder auch der Drehzahlregelung verzichtet werden. Gemäß der Erfindung ist es möglich einen Wert direkt aus der feldorientierten Regelung zu verwenden.

In einer weiteren Ausprägung der feldorientierten Regelung kann zur direkten Regelung von Ausgangsströmen eines Wechselrichters, der eine Drehfeldmaschine ohne Drehzahlistwertgeber speist, ein Strom-Führungsgrößenbildner derart ausgestaltet werden, dass dieser aus den Istwerten der Wechselrichter-Ausgangsströme, den Schaltzuständen der Stromrichterventile des Wechselrichters und einem Drehzahlsollwert ein dreiphasiges, sinusförmiges Strom-Führungsgrößensystem erzeugt das einer unterlagerten Stromregelung zugeführt wird. Mittels eines Istwertrechners eines Strom-Führungsgrößenbildners wird zunächst aus den Wechselrichter-Ausgangsströmen (Strangströme der Drehfeldmaschine), den Schaltzuständen der Stromrichterventile des Wechselrichters und der ermittelten Stromamplitude der Strom-Führungsgröße die Istwerte der der Drehfeldmaschine zugeführten Wirk- und Blindströme berechnet, die dann in eine drehmoment- und eine flußbildende Stromkomponente transformiert werden. Mittels dieser feldorientierten Größen werden der drehmoment- und der flußbildende Strom-Führungsgrößenwert getrennt voneinander erzeugt. Außerdem kann mittels eines gebildeten Beschleunigungssignals der Drehzahlistwert bestimmt werden, der zur Ermittlung des Führungswertes der drehmomentbildenden Stromkomponente benötigt wird. Somit kann mit diesem Strom-Führungsgrößenbildner mittels der feldorientierten Regelung nur aus den Istwerten der Wechselrichter-Ausgangsströme und den Schaltzuständen der Ventile dieses Wechselrichters ein Strom-Führungsgrößensystem für eine unterlagerte Stromregelung erzeugt werden, wodurch eine Drehfeldmaschine ohne eine Drehzahlistwerterfassung einfach geführt werden kann, wobei selbst bei geringen Drehzahlen ein sehr gutes Rundlaufverhalten erzielt wird. Wird nun gemäß der Erfindung zur Regelung der elektrischen Maschine (Drehfeldmaschine) ein Geber mit verwendet, um beispielsweise die Genauigkeit der Regelung zu verbessern, kann der Geber mittels des errechneten Drehzahlistwertes überwacht werden.

Gemäß des erfindungsgemäßen Verfahrens zum Betrieb einer Antriebsvorrichtung, welche insbesondere:
- eine elektrische Maschine,
- einen Geber für die elektrische Maschine
- einen Stromrichter und
- eine Vorrichtung zur Durchführung einer feldorientierten Regelung
aufweist, wird ein Gebersignals des Gebers mit einer Größe aus der feldorientierten Regelung verglichen. Diese Größe ist beispielsweise ein aus Stromistwerten und weiteren Größen der Regelung errechneter Drehzahlistwert. Das Gebersignal wird beispielsweise zu einer Vergleichseinrichtung übermittelt und dort mit der Größe aus der feldorientierten Regelung verglichen. Mittels dieses Vergleiches wird dann beispielsweise auf folgendes erkannt:
- einen Geberfehler und/oder
- einen Kupplungsfehlers.

Ein Kupplungsfehler kann bei Antriebsvorrichtung auftreten, welche eine Kupplung aufweisen, wobei die Kupplung eine Antriebsseite und eine Abtriebsseite aufweist und der Geber auf der Abtriebsseite der Kupplung positioniert ist, da sich auf der Antriebsseite der Kupplung die elektrische Maschine befindet. Bei einem Geber- bzw. Kupplungsfehler entfernt sich der errechnete Drehzahlistwert vom gemessenen Geberdrehzahlistwert.

Vorteilhaft wird der Vergleich der Größen/Werte in einer Vergleichseinrichtung durchgeführt, welche in einer Steuerungs- und/oder Regelungsvorrichtung des Stromrichters integriert ist, wobei der Vergleich mittels der Steuerungs- und/oder Regelungsvorrichtung durchgeführt wird.

Weiterhin ist es vorteilhaft, wenn die Vergleichseinrichtung ab einer Mindestdrehzahl aktiviert wird. Damit kann verhindert werden, dass beispielsweise in einem nicht geregelten Ruhezustand der elektrischen Maschine eine Fehlermeldung generiert wird. Die Fehlerüberwachung ist also mit der Aktivierung der Drehzahl- und/oder Lageregelung der elektrischen Maschine gekoppelt.

Wird mittels der Vergleichseinrichtung eine unzulässige Abweichung zweier Vergleichsgrößen (gemessen bzw. errechnet) erkannt, kann daraufhin eine Notfallabschaltung aktiviert wird. Dies geschieht beispielsweise dadurch dass:
- die elektrische Maschine mittels des errechneten Drehzahlistwertes an einer Rampe heruntergefahren wird, oder
- eine Zündimpulssperre für den Stromrichter ausgelöst wird.

In einer vorteilhaften Ausgestaltung erfolgt die Überprüfung auf einen Geberfehler innerhalb einer vorgebbaren Prüfungsphase. In dieser Prüfungsphase wird beispielsweise eine definierte Strecke bzw. eine definierte Rotation durchgeführt, (auch beispielsweise über zwei Nocken), um damit das Modell (Strommodell und/oder Spannungsmodell) zu überprüfen bzw. abzugleichen. Damit ließe sich beispielsweise auch in einfacher Weise ein leichtes Durchrutschen einer Kupplung oder einer Geberscheibe des Gebers feststellen. Die Kupplung dient dabei der Ankupplung der Geberscheibe an eine Geberwelle der elektrischen Maschine.

In einer weiteren vorteilhaften Ausgestaltung der elektrischen Maschine weist diese zusätzliche Wicklungen und/oder weitere Sensoren zur Messung der Lage bzw. Drehzahl des Rotors auf. Wenn diese zur redundanten Überprüfung des Gebersignals verwendet werden, benötigen diese eine diesem Gebersignal entsprechende Auflösung.

Zur weiteren Erläuterung der Erfindung wird auf die Zeichnung Bezug genommen, in der Ausführungsbeispiele der Erfindung schematisch dargestellt sind. Dabei zeigt:
- Figur 1: eine Regelungsstruktur bei welcher ein Drehzahlistwert errechnet wird und
- Figur 2: eine Antriebsvorrichtung.

In den Figuren sind gleiche Gegenstände mit denselben Bezugszeichen versehen.

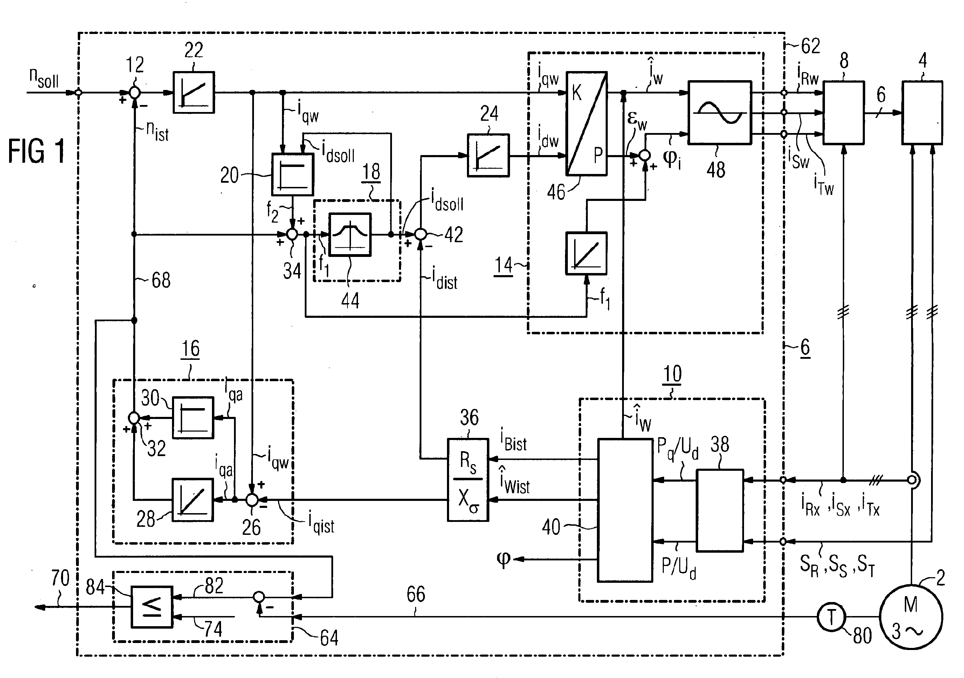

In Figur 1 ist eine Schaltungsanordnung für eine feldorientierte Regelung zur direkten Regelung von Wechselrichter-Ausgangströmen i_{Rx}, i_{Sx} und i_{Tx} eines Umrichters dargestellt, der eine Drehfeldmaschine 2 speist. Eine zur Steuerung und/oder Regelung vorgesehene Vorrichtung 62 weist die entsprechenden Regler auf. Der Übersichtlichkeit halber ist von einem Umrichter nur der lastseitige Wechselrichter 4 dargestellt. Als Umrichter kann ein Spannungszwischenkreis- oder ein Stromzwischenkreisumrichter verwendet werden. Der lastseitige Wechselrichter 4 ist mit abschaltbaren Stromrichterventilen aufgebaut. Als abschaltbare Stromrichterventile können Transistoren oder Gate Turn-Off-Thyristoren (GTO-Thyristoren) verwendet werden. Die Schaltzustände dieser Ventile werden durch die Schaltzustandssignale S_{R}, S_{S} und S_{T} angezeigt.

Die Regelung besteht aus einem Strom-Führungsgrößenbildner 6 und einer unterlagerten Stromregelung 8. Der Strom-Führungsgrößenbildner 6 erzeugt aus den Wechselrichter-Ausgangsströmen i_{Rx}, i_{Sx} und i_{Tx} und einem vorgebbaren Drehzahlsollwert n_{Soll} mittels der Schaltzustandssignale S_{R}, S_{S} und S_{T} beispielsweise ein dreiphasiges, sinusförmiges Strom-Führungsgrößensystem i_{Rw}, i_{Sw} und i_{Tw} für die unterlagerte Stromregelung 8. Außerdem werden dieser unterlagerten Stromregelung 8 noch die Istwerte der Wechselrichter- Ausgangsströme i_{Rx}, i_{Sx} und i_{Tx} zugeführt, wobei mittels eines Vergleiches von Führungswerten i_{Rw}, i_{Sw} und i_{Tw} und Istwerten iRx, i_{Sx} und i_{Tx} die Ventile des Wechselrichters 4 angesteuert werden. Der Strom-Führungsgrößenbildner 6 besteht eingangsseitig aus einem Istwertrechner 10 und einem ersten Vergleicher 12 und ausgangsseitig aus einer Transformationseinrichtung 14. Außerdem enthält dieser Führungsgrößenbildner 6 ein Drehzahlistwertmodell 16, einen flußbildenden Stromkomponenten-Sollwertbildner 18, eine Schlupfkompensation 20, einen Drehzahlregler 22 und einen flußbildenden Stromkomponentenregler 24. Am positiven Eingang des ersten Vergleichers 12 steht ein vorbestimmter Drehzahlsollwert n_{Soll} an und an seinem negativen Eingang steht ein nachgebildeter Drehzahlistwert nᵢₛₜ an, der mittels des Drehzahlistwertmodells 16 gebildet wird.

Gemäß der Erfindung wird der Drehzahlistwert nᵢₛₜ als eine errechnete Größe 68 einer Vergleichseinrichtung 64 zugeführt. Ein Geber 80 ist zur Erfassung der Drehzahl der elektrischen Maschine 2 vorgesehen. Ein Gebersignal 66 des Gebers 80 bildet ein Eingangssignal der Vergleichseinrichtung 64. Dort wird das Gebersignal 66 mit der errechneten Drezahlgröße 68 verarbeitet. Dies geschieht im vorliegenden Beispiel mittels einer Subtraktion. Eine daraus resultierende Differenzgröße 82 wird mittels eines Vergleichers 84 mit einem Schwellwert 74 verglichen. Überschreitet die Differenzgröße 82 den eingestellten bzw. einstellbaren Schwellwert, so wird ein Fehlersignal 70 generiert.

Aus der Drehzahldifferenz am Ausgang des Vergleichers 12 wird mittels des Drehzahlreglers 22 ein Führungswert der drehmomentbildenden Stromkomponente i_{qw} gebildet. Diese drehmomentbildende Stromführungswertkomponente i_{qw} wird einerseits einem positiven Eingang des Drehzahlistwertmodells 16 und der Schlupfkompensation 20 und andererseits einem ersten Eingang der ausgangsseitigen Transformationseinrichtung 14 zugeführt. Am negativen Eingang des Drehzahlistwertmodells 16 steht ein ermittelter Istwert der drehmomentbildenden Stromkomponente i_{qist} an.

Der positive und negative Eingang des Drehzahlistwertmodells 16 gehören einem eingangsseitigen Vergleicher 26, der die Differenz i_{qa} vom Führungswert und vom Istwert der drehmomentbildenden Stromkomponente i_{qw} und i_{qist} bildet. Diese Stromkomponenten i_{qw} und i_{qist} sind äquivalent dem Motormoment und dem Lastmoment. Somit ist die Stromkomponentendifferenz i_{qa} äquivalent zur Drehmomentdifferenz. Diese Drehmomentdifferenz ist gleich einem Beschleunigungsmoment. Der äquivalente Stromkomponentendifferenzwert i_{qa} wird einerseits einem integral wirkenden und einem proportional wirkenden Regler 28 und 30 zugeführt. Die Ausgänge dieser Regler 28 und 30 werden mittels eines Addierers 32 addiert, an dessen Ausgang stationär der nachgebildete Drehzahlistwert nᵢₛₜ steht. Durch die Verwendung des proportional wirkenden Reglers 30 wird das dynamische Verhalten des Antriebs wesentlich verbessert. Dieser Drehzahlistwert nᵢₛₜ wird außerdem einem weiteren Addierer 34 zugeführt, an dessen zweitem Eingang die Schlupffrequenz f₂ ansteht. Am Ausgang dieses Addierers 34 erhält man die Ständerfrequenz fₗ, die der ausgangsseitigen Transformationseinrichtung 14 zugeführt wird. Der Istwert der drehmomentbildenden Stromkomponente i_{qist} ist eine der beiden feldorientierten Größen, die mittels des eingangsseitigen Istwertrechners 10 und einer nachgeschalteten Transformationseinrichtung 36 aus den Wechselrichter-Ausgangsströmen i_{Rx}, i_{Sx} und i_{Tx} und den Schaltzustandssignalen S_{R}, S_{S} und S_{T} der Wechselrichterventile erzeugt werden.

Der Istwertrechner 10 besteht aus einer Leistungserfassung 38 und einer Istwertrecheneinrichtung 40. An den Ausgängen dieser Leistungserfassung 38 stehen die auf die Zwischenkreisspannung U_{d} bezogene Wirk- und Blindleistung P/U_{d} und P_{q}/U_{d} an. Die Istwertrecheneinrichtung 40 berechnet daraus die dem Motor 2 zugeführten Istwerte der Wirk- und Blindströme i_{Wist} und i_{Bist} und den Phasenwinkel 9. Diese Istwerte können berechnet werden. Aus den Istwerten der Wirk- und Blindströme i_{Wist} und i_{Bist} werden über eine den Wicklungswiderstand Rₛ der Ständerwicklung und die Streuung X berücksichtigende Transformation die Istwerte der drehmomentbildenden und der flußbildenden Stromkomponente i_{qist} und i_{dist} des Motorstromes gebildet. Der Istwert der flußbildenden Stromkomponente i_{dist} wird einem negativen Eingang eines weiteren Vergleichers 42 zugeführt, an dessen positivem Eingang der Sollwert der flußbildenden Stromkomponente i_{dsoll} ansteht. Dieser Sollwert i_{dsoll} wird über eine Kennlinie von der Ausgangsfrequenz (Ständerfrequenz) f₁ abgeleitet. Deshalb wird die gebildete Ständerfrequenz f₁ einem lastunabhängigen Sollwertbildner 44 des flußbildenden Stromkomponenten-Sollwertbildners 18 zugeführt, an dessen Ausgang dann der Sollwert der flußbildenden Stromkomponente i_{dsoll} ansteht. Dieser Sollwert i_{dsoll} wird außerdem der Schlupfkompensation 20 zugeführt. Aus der Differenz von Sollwert i_{dsoll} und Istwert i_{dist} wird mittels des Stromreglers 24 der Führungswert der flußbildenden Stromkomponente i_{dw} erzeugt.

Aus den feldorientierten Führungsgrößen i_{qw} und i_{dw} und der Ständerfrequenz f₁ wird mittels der Transformationseinrichtung 14 zunächst der Betrag l̂_{w} und der Lastwinkel ε_{w} gebildet. Den Betrag l̂_{w} und den Lastwinkel ε_{w}, erhält man mittels eines K/P-Wandlers 46 (kartesisch/polar) aus den feldorientierten Stromkomponenten i_{qw} und i_{dw}. Aus diesem Lastwinkel ε_{w} und dem Integral der Ständerfrequenz f₁ erhält man den Stromphasenwinkel Φᵢ des Stromvektors iₛ. Aus diesem Stromphasenwinkel Φᵢ und dem Betrag l̂_{w} wir mittels eines Führungsgrößensystembildners 48 beispielsweise ein dreiphasiges, sinusförmiges Führungsgrößensignal i_{Rw}, i_{Sw} und i_{Tw} gebildet.

Gemäß der vorliegenden Erfindung ist es möglich, dass zusätzlich zu der bestehenden Sicherheitstechnik bzw. als sicherheitstechnische Maßnahme Messwerte für die Regelung der elektrischen Maschine zur Abschätzung und Kontrolle der Drehzahl verwendet werden. Derartige Messwerte zur Berechnung der Drehzahl sind beispielsweise Strom- und/oder Spannungswerte der elektrischen Maschine, wobei mittels derartiger Messwerte ein Modell in einer Antriebssteuerung bzw. Antriebsregelung speisbar ist. Derartige Modelle werden sowohl in geberlos betriebenen elektrischen Maschinen als auch in elektrischen Maschinen, welche mittels einer feldorientierten Regelung geregelt werden, verwendet. Mit Hilfe dieses abgeschätzten Drehzahlwertes kann das Gebersignal überwacht werden. Auf diese Weise ist sowohl ein Kupplungsbruch wie auch ein Geberfehler in der Geberelektronik bzw. auch in der Mechanik des Gebers leicht erkennbar. Durch die Heranziehung eines Modells der elektrischen Maschine, welches bereits in einer Antriebssteuerung und/oder Antriebsregelung verwendet wird, lässt sich in besonders einfacher Weise die Überwachung auf einen Geberfehler realisieren.

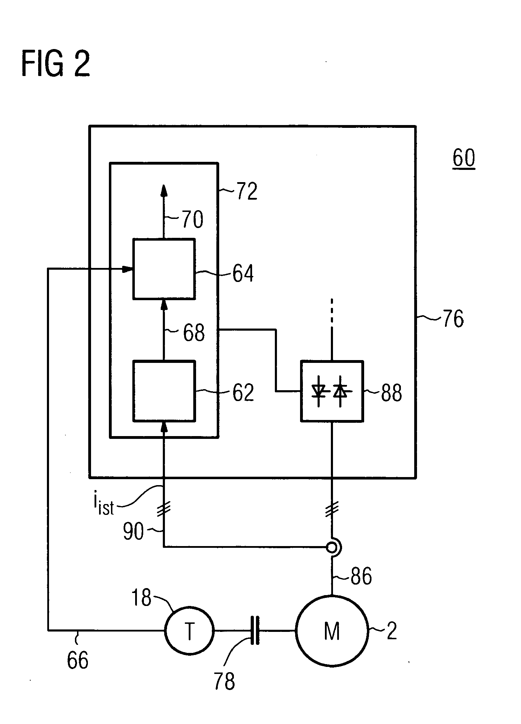

Die Darstellung gemäß Figur 2 zeigt eine Antriebsvorrichtung 60. Diese weist ein Stromrichtergerät 76 und eine elektrische Maschine 2 auf. Zur Feststellung der Drehzahl der elektrischen Maschine 2 ist ein Geber 18 (Tacho) über eine Kupplung 78 mit der elektrischen Maschine 2 verbunden. Der Geber 18 ist datentechnisch mit dem Stromrichtergerät 76 verbunden, wobei eine Übermittlung eines Gebersignals 66 an das Stromrichtergerät 76 vorgesehen ist. Das Stromrichtergerät 76 weist eine Einrichtung zur Steuerung und/oder Regelung 72 auf. An diese Einrichtung zur Steuerung und/oder Regelung der elektrischen Maschine 2 werden Istwerte i_{r,s,t} übermittelt. Hierfür sind beispielsweise Stromwandler vorgesehen, welche den Strom von Leistungskabeln 86, welche zur Versorgung der elektrischen Maschine 2 dienen, messen. Die Leistungskabel 86 sind an das Stromrichtergerät 76 angeschlossen, wobei das Stromrichtergerät ein Leistungsteil 88 aufweist. Die Einrichtung zur Steuerung und/oder Regelung 72 weist eine Vorrichtung zur feldorientierten Regelung 62 auf. In dieser Vorrichtung 62 werden die Strom-Istwerte 90 verarbeitet. Aus der feldorientierten Regelung lässt sich eine Größe 68 errechnen, welche mittels einer Vergleichseinrichtung 64 mit dem Gebersignal 66 vergleichbar ist. Aus dem Vergleich ergibt sich nachfolgend die Generierung eines Fehlersignals für den Fall, dass durch den Vergleich auf einen Fehler des Gebers 18 bzw. der Kupplung 78 zu schließen ist.

## Patentansprüche

1. Antriebsvorrichtung (60) einer elektrischen Maschine, welche eine Vorrichtung zur feldorientierten Regelung der elektrischen Maschine (2) aufweist, **dadurch gekennzeichnet, dass** eine Vergleichseinrichtung (64) zum Vergleich eines Gebersignals (66) eines Gebers (80) der elektrischen Maschine (2) mit einer errechneten Drehzahlgröße (68) aus der feldorientierten Regelung vorgesehen ist,
wobei an einem Drehzahlistwertmodell (16) zum errechnen der Drehzahlgröße (68) ein Istwert einer drehmomentbildenden Stromkomponente (i_{qist}) und ein Führungswert einer drehmomentbildende Stromkomponente (i_{qw}), welchem der Istwert der drehmomentbildenden Stromkomponente (i_{qist}) zugrunde liegt, anstehen,
wobei die Vergleichseinrichtung (64) zur Erkennung eines:
- Geberfehlers und/oder
- Kupplungsfehlers vorgesehen ist.

2. Antriebsvorrichtung (60) nach Anspruch 1,
**dadurch gekennzeichnet, dass** die Vergleichseinrichtung (64) zum Vergleich einer drehzahlabhängigen Größe vorgesehen ist.

3. Antriebsvorrichtung (60) nach Anspruch 1 oder 2,
**dadurch gekennzeichnet, dass** die Vergleichseinrichtung (64) in einer Steuerung und/oder Regelung eines Stromrichters (72) integriert ist.

4. Antriebsvorrichtung (60) nach einem der Ansprüche 1 bis 3,
**dadurch gekennzeichnet, dass** diese zur Durchführung des Verfahrens nach einem der Ansprüche 5 bis 9 vorgesehen ist.

5. Verfahren zum Betrieb einer Antriebsvorrichtung (60), welche eine elektrische Maschine (2), einen Stromrichter (64), eine feldorientierte Regelung (62) und einen Geber (80) aufweist,
**dadurch gekennzeichnet, dass** eine Vergleichseinrichtung (64) zum Vergleich eines Gebersignals (66) des Gebers (80) mit einer Drehzahlgröße (68) aus der feldorientierten Regelung (62) vorgesehen ist,
wobei die Drehzahlgröße (68) mittels eines Istwerts einer drehmomentbildenden Stromkomponente (i_{qist}) und einem Führungswert einer drehmomentbildende Stromkomponente (i_{qw}), welcher der Istwert der drehmomentbildenden Stromkomponente (i_{qist}) zugrunde liegt, mittels eines Drehzahlistwertmodells (16) errechnet wird,
wobei das Gebersignal (66) zur Vergleichseinrichtung (64) übermittelt wird und mit der errechneten Größe (66) aus der feldorientierten Regelung (62) derart verglichen wird, dass:
- ein Geberfehler (70) erkannt wird und/oder
- ein Kupplungsfehler (70) erkannt wird, wobei die Antriebsvorrichtung (60) eine Kupplung (78) für den Geber (18) aufweist.

6. Verfahren nach Anspruch 5,
**dadurch gekennzeichnet, dass** mittels der Vergleichseinrichtung (64) drehzahlabhängige Größen miteinander verglichen werden.

7. Verfahren nach Anspruch 5 oder 6,
**dadurch gekennzeichnet, dass** die Vergleichseinrichtung (64) in einer Steuerungs- und/oder Regelungsvorrichtung (72) des Stromrichters (76) integriert ist und der Vergleich mittels der Steuerungs- und/oder Regelungsvorrichtung (72) durchgeführt wird.

8. Verfahren nach einem der Ansprüche 5 bis 7,
**dadurch gekennzeichnet, dass** die Vergleichseinrichtung (64) ab einer Mindestdrehzahl aktiviert wird.

9. Verfahren nach einem der Ansprüche 5 bis 8,
**dadurch gekennzeichnet, dass** mittels der Vergleichseinrichtung (64) eine unzulässige Abweichung zweier Vergleichsgrößen (66, 68) erkannt wird, wonach insbesondere eine Notfallabschaltung aktiviert wird.

## Claims

1. Drive device (60) of an electric machine, having a device for field oriented control of the electric machine (2),
**characterised in that**
a comparator device (64) is provided for comparing an encoder signal (66) of an encoder (80) on the electric machine (2) with a calculated speed parameter (68) from the field oriented control,
an actual value of a torque-forming current component (i_{qist}) and a guide value of a torque-forming current component (i_{qw}), which is based on the actual value of the torque-forming current component (i_{qist}), being present in an actual speed value model (16) for calculating the speed parameter (68), the comparator device (64) being provided for the recognition of:
- an encoder error and/or
- a coupling error.

2. Drive device (60) according to claim 1,
**characterised in that**
the comparator device (64) is provided for comparing a speed dependent parameter.

3. Drive device (60) according to claim 1 or 2,
**characterised in that**
the comparator device (64) is integrated into a control and/or regulator of a rectifier (72).

4. Drive device (60) according to one of claims 1 to 3,
**characterised in that**
the device is provided for performing the method according to one of claims 5 to 9.

5. Method for operating a drive device (60) which has an electric machine (2), a rectifier (64), a field oriented control (62) and an encoder (80),
**characterised in that**
a comparator device (64) is provided for comparing an encoder signal (66) from the encoder (80) with a speed parameter (68) from the field oriented control (62),
the speed parameter (68) being calculated by means of an actual value of a torque-forming current component (i_{qist}) and a guide value of a torque-forming current component (i_{qw}), which is based on the actual value of the torque-forming current component (i_{qist}), being calculated by means of an actual speed value model (16),
said encoder signal (66) being transmitted to the comparator device (64) and being compared with the calculated parameter (66) from the field oriented control (62) in such a way that:
- an encoder error (70) is recognised and/or
- a coupling error (70) is recognised, the drive device (60) having a coupling (78) for the encoder (18).

6. Method according to claim 5,
**characterised in that**
speed dependent parameters are compared with one another by means of the comparator device (64).

7. Method according to claim 5 or 6,
**characterised in that**
the comparator device (64) is integrated into a control and/or regulation device (72) of the rectifier (76) and the comparison is performed by means of said control and/or regulation device (72).

8. Method according to one of claims 5 to 7,
**characterised in that**
the comparator device (64) is activated with effect from a minimum speed.

9. Method according to one of claims 5 to 8,
**characterised in that**
an illegal deviation between the two compared parameters (66, 68) is detected by the comparator device (64), whereupon in particular an emergency cutoff is activated.

## Revendications

1. Dispositif ( 60 ) d'entraînement d'une machine électrique, qui a un dispositif de régulation de la machine ( 2 ) électrique par le champ,
**caractérisé en ce qu'**il est prévu un dispositif ( 64 ) de comparaison pour comparer un signal ( 66 ) d'un émetteur ( 80 ) de la machine ( 2 ) électrique à une grandeur ( 68 ) de vitesse de rotation provenant de la régulation par le champ,
dans lequel il est appliqué un modèle ( 16 ) de valeur réelle de vitesse de rotation, pour le calcul de la grandeur ( 68 ) de vitesse de rotation, une valeur réelle d'une composante ( iqist ) de courant formant le couple de rotation et une valeur de guidage d'une composante ( iqw ) de courant formant le couple de rotation, qui est à la base de la valeur réelle de la composante ( iqist ) de courant formant le couple de rotation,
dans lequel le dispositif ( 64 ) de comparaison est prévu pour détecter :
un défaut du détecteur et/ou
un défaut de couplage.

2. Dispositif ( 60 ) d'entraînement suivant la revendication 1, **caractérisé en ce que** le dispositif ( 64 ) de comparaison est prévu pour comparer une grandeur qui dépend de la vitesse de rotation.

3. Dispositif ( 60 ) d'entraînement suivant la revendication 1 ou 2, **caractérisé en ce que** le dispositif ( 64 ) de comparaison est intégré dans une commande et/ou dans une régulation d'un convertisseur ( 72 ) de courant.

4. Dispositif ( 60 ) d'entraînement suivant l'une des revendications 1 à 3, **caractérisé en ce qu'**il est prévu pour effectuer le procédé suivant l'une des revendications 5 à 9.

5. Procédé pour faire fonctionner un dispositif ( 60 ) d'entraînement qui a une machine ( 2 ) électrique, un convertisseur ( 64 ) de courant, une régulation ( 62 ) par le champ et un émetteur ( 80 ),
**caractérisé en ce qu'**il est prévu un dispositif ( 64 ) de comparaison, pour comparer un signal ( 66 ) de l'émetteur ( 80 ) à une grandeur ( 68 ) de vitesse de rotation provenant de la régulation par le champ,
la grandeur ( 68 ) de vitesse de rotation étant calculée au moyen d'un modèle ( 66 ) de vitesse réelle de vitesse de rotation à l'aide d'une valeur réelle d'une composante ( iqist ) de courant formant un couple de rotation et d'une valeur de guidage d'une composante ( iqw ) de courant formant un couple de rotation, qui est à la base de la valeur réelle de la composante ( iqist ) de courant formant un couple de rotation,
le signal ( 66 ) de l'émetteur étant transmis au dispositif ( 64 ) de comparaison et étant comparé à la grandeur ( 66 ) calculée provenant de la régulation ( 62 ) par le champ de façon à :
détecter un défaut ( 70 ) de l'émetteur et/ou
détecter un défaut ( 70 ) de couplage, le dispositif ( 60 ) d'entraînement ayant un couplage ( 78 ) pour l'émetteur ( 18 ).

6. Procédé suivant la revendication 5,
**caractérisé en ce que** l'on compare entre elles des grandeurs qui dépendent de la vitesse de rotation à l'aide du dispositif ( 64 ) de comparaison.

7. Procédé suivant la revendication 5 ou 6,
**caractérisé en ce que** le dispositif ( 64 ) de comparaison est intégré dans un dispositif ( 72 ) de commande et/ou de régulation du convertisseur ( 76 ) de courant et l'on effectue la comparaison au moyen du dispositif ( 72 ) de commande et/ou de régulation.

8. Procédé suivant l'une des revendications 5 à 7,
**caractérisé en ce que** l'on active le dispositif ( 64 ) de comparaison à partir d'une valeur de rotation minimale.

9. Procédé suivant l'une des revendications 5 à 8,
**caractérisé en ce que** l'on détecte un écart inadmissible entre deux grandeurs ( 66, 68 ) de comparaison à l'aide du dispositif ( 64 ) de comparaison en activant ensuite notamment une interruption en cas d'urgence.
